# EUROPÄISCHE PATENTANMELDUNG

(11) **EP 4 245 506 A1**
(43) Veröffentlichungstag der Anmeldung: **20.09.2023**
(21) Anmeldenummer: 22162238.4
(22) Anmeldetag: 15.03.2022
(51) Int. Cl.: B29C 64/153, C08K 3/04, C08K 3/22

(54) **PULVER ZUR VERARBEITUNG IN EINEM SCHICHTWEISEN VERFAHREN MIT LASERN IM SICHTBAREN UND NAHINFRAROTBEREICH**

(71) Anmelder: Evonik Operations GmbH, 45128 Essen (DE)
(72) Erfinder: Die Erfindernennung liegt noch nicht vor
(74) Vertreter: Evonik Patent Association

(57) **Zusammenfassung**

Die vorliegende Erfindung betrifft Pulver für additive Fertigungsverfahren, wobei das Pulver Verbundpartikel enthält, die als Kernpartikel eine NIR absorbierende Komponente enthalten. Somit kann ein gleichmäßiges Aufschmelzen des Pulvers erzielt werden.

## Beschreibung

Die vorliegende Erfindung betrifft Pulver für additive Fertigungsverfahren, wobei das Pulver Verbundpartikel enthält, die als Kernpartikel eine NIR absorbierende Komponente enthalten. Somit kann ein gleichmäßiges Aufschmelzen des Pulvers erzielt werden.

Übliche Pulver im SLS haben eine schlechte Absorption im sichtbaren und Nahinfrarotbereich. Laser, die in diesem Wellenlängenbereich strahlen, können nicht oder nur schlecht ins Pulver einkoppeln.

Üblicherweise werden Pulver mit einem absorbierenden Pigment beschichtet, meist im dryblend-Verfahren. Das Absorberpigment befindet sich dabei dann hauptsächlich auf der Oberfläche, was an einem niedrigen L*-Wert des so hergestellten Pulvers zu erkennen ist. Eine Alternative dazu ist, dass das absorbierende Pigment in eine Polymerschmelze eingetragen wird. Die erstarrte Schmelze wird dann granuliert und anschließend vermahlen. Nachteil des Standes der Technik ist, dass der Laser hauptsächlich an der Oberfläche des Pulverpartikels einkoppelt. Der Kern eines Partikels wird daher nicht direkt durch den Laser aufgeschmolzen, sondern nur über Wärmeleitung der stark erhitzen Außenschicht des Partikels. Dadurch bedingt werden die Kerne der Partikel nicht oder nur teilweise aufgeschmolzen und wirken als Kristallisationskeime, die ein vorzeitiges Erstarren der Schmelze bewirken, dieses bewirkt wiederum eine höhere Verzugsneigung der erstellten Bauteile.

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet.

Die Selektivität der schichtweise arbeitenden Verfahren kann dabei beispielsweise über den Auftrag von Suszeptoren, Absorbern, Inhibitoren oder durch Masken oder über fokussierte Energieeinbringung, wie beispielsweise durch einen Laserstrahl, oder über Glasfasern erfolgen. Der Energieeintrag wird bevorzugt über elektromagnetische Strahlung erreicht.

Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird eingehend in den Patentschriften US 6 136 948 und WO 96/06881 beschrieben. Eine Vielzahl von Polymeren und Copolymeren wird für diese Anwendung beansprucht, wie z. B. Polyacetat, Polypropylen, Polyethylen, lonomere und Polyamid.

Andere gut geeignete Verfahren sind das SIV-Verfahren, wie in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8 , DE 10 2004 012 683.6 und DE 10 2004 020 452.7 beschrieben.

Für die genannten Rapid-Prototyping- bzw. Rapid-Manufacturing-Verfahren (RP- oder RM-Verfahren) können pulverförmige Substrate, insbesondere Polymere, vorzugsweise ausgewählt aus Polyestern, Polyvinylchlorid, Polyacetal, Polypropylen, Polyethylen, Polystyrol, Polycarbonat, Poly-(N-methylmethacrylimide) (PMMI), Polymethylmethacrylat (PMMA), lonomer, Polyamid, oder Gemische davon eingesetzt werden.

In WO 95/11006 wird ein für das Lasersintern geeignetes Polymerpulver beschrieben, das bei der Bestimmung des Schmelzverhaltens durch Differential Scanning Calorimetry bei einer Scanningrate von 10 bis 20 °C/min keine Überlappung des Schmelze- und Rekristallisationspeaks zeigt, einen ebenfalls durch DSC bestimmten Kristallinitätsgrad von 10 bis 90% aufweist, ein zahlenmäßiges Mittel des Molekulargewichts Mn von 30 000 bis 500 000 hat und dessen Quotient Mw/Mn im Bereich von 1 bis 5 liegt.

Die DE 197 47 309 beschreibt die Verwendung eines Polyamid-12-Pulvers mit erhöhter Schmelztemperatur und erhöhter Schmelzenthalpie, welches durch Umfällung eines zuvor durch Ringöffnung und anschließende Polykondensation von Laurinlactam hergestellten Polyamids erhalten wird. Es handelt sich dabei um ein Polyamid 12.

Die WO 2007/051691 beschreibt Verfahren zur Herstellung von ultrafeinen Pulvern auf Basis von Polyamiden, bei welchem man Polyamide in Gegenwart von anorganischen Partikeln ausfällt, wobei man eine Suspension einsetzt mit im alkoholischen Medium suspendierten anorganischen Partikeln mit einer mittleren Größe der anorganischen Partikel dv₅₀ im Bereich von 0,001 bis 0,8 µm. Ziel dieses Verfahrens war es eine Färbung des Pulvers zu erreichen. Dabei wurden Polyamidfeinpulver erhalten, wobei die anorganischen Partikel aufgrund ihrer geringen Größe gleichmäßig im Verbundteilchen verteilt sind.

Die DE 10 2004 003 485 beschreibt die Verwendung von Partikeln mit zumindest einer Kavität zur Verwendung in schichtaufbauenden Verfahren. Dabei enthalten alle Partikel zumindest eine Kavität, und die die Kavität enthaltenden Partikel werden durch den Eintrag elektromagnetischer Energie aufgeschmolzen. Die beschriebenen Pulverteilchen weisen eine Oberflächenschicht mit geringer Stärke auf.

Die DE 102 27 224 beschreibt ein Granulat für 3D-Binderdruck, das aus mit einer eine unpolare Außenfläche aufweisenden Oberflächenschicht versehenen Partikeln besteht. Die Oberflächenschicht der beschriebenen Pulverteilchen weist jedoch eine geringe Stärke auf.

Die oben beschriebenen Pulver werden im Stand der Technik gelegentlich zur Verstärkung mit anderen Partikeln wie z.B. Metallpartikel, Glaspartikel oder TiO₂-Partikel vermischt.

Insbesondere wenn im Rapid Manufacturing die Handhabung des Pulvers automatisiert wird, entstehen schwer kontrollierbar abweichende Eigenschaften an den produzierten Bauteilen.

Entsprechend ist die Aufgabe der vorliegenden Erfindung ein Pulver bereitzustellen, welches eine gute Absorption im Nahinfrarotbereich (NIR) und bevorzugt auch im sichtbaren Bereich zeigt und gleichzeitig nicht die Nachteile des Stands der Technik hat.

Überraschend wurde gefunden, dass die Aufgabe durch ein Kern-Schale Aufbau des Partikels erreicht werden kann. Im Kern des Partikels ist dabei der NIR Absorber konzentriert. Durch diesen Aufbau des Partikels wird erreicht, dass die Pulverpartikel gleichmäßiger aufgeschmolzen werden. Das erfindungsgemäßen Pulvermaterial wird dabei mittels Fällprozess erhalten, bei dem in der Fällung vorzugsweise mindestens 0,1% eines Absorbers zugesetzt wird so das Polymer diesen Absorber umschließ und eine Hülle-Kern Aufbau erzielt wird.

Entsprechend betrifft die Erfindung ein Pulver zur Verwendung in einem schichtweise arbeitenden Verfahren zur Herstellung von Formkörpern, bei dem selektiv Bereiche der jeweiligen Pulverschicht durch den Eintrag elektromagnetischer Energie aufgeschmolzen werden, enthaltend Verbundpartikel, die von ganz oder teilweise mit einem gefällten ersten Polymer beschichten Kernpartikeln dargestellt werden, dadurch gekennzeichnet, dass die Kernpartikel eine NIR (Nahinfrarot oder nahes Infrarot) absorbierende Komponente enthalten.

Nahes Infrarot (NIR) gemäß der Erfindung befindet sich insbesondere in einem Wellenlängenbereich von 780 bis 1500 nm.

Die NIR absorbierende Komponente können bei jeder Wellenlänge im Bereich von 780 bis 1500 nm eine Absorption von mindestens 40 %, bevorzugt 45 %, bevorzugter 50 %, besonders bevorzugt 55 %, und ganz besonders bevorzugt 60 %, aufweist. Der Begriff "bei jeder Wellenlänge" bezieht sich auf jede ganzzahlige Wellenlänge.

Die NIR absorbierende Komponente können im Wellenlängenbereich der elektromagnetischen Energie des Lasers von 780 bis 1500 nm eine Absorption von mindestens 40 %, bevorzugt 45 %, bevorzugter 50 %, besonders bevorzugt 55 %, und ganz besonders bevorzugt 60 %, aufweist. Der Begriff "bei jeder Wellenlänge" bezieht sich auf jede ganzzahlige Wellenlänge.

Auch kann die NIR absorbierende Komponente bei dem Durchschnitt der Wellenlänge im Bereich von 780 bis 1500 nm eine Absorption von mindestens 40 %, bevorzugt 45 %, bevorzugter 50 %, besonders bevorzugt 55 %, und ganz besonders bevorzugt 60 %, aufweist.

Die NIR absorbierende Komponente sollten im Wellenlängenbereich (bevorzugt +/- 10 nm) der elektromagnetischen Energie des Lasers eine Absorption von mindestens 40 %, bevorzugt 50 %, bevorzugter 60 %, besonders bevorzugt 65 %, und ganz besonders bevorzugt 70 %, aufweisen. Die Wellenlänge eines Nd-YAG Laser ist beispielsweise 1064 nm. Die Wellenlänge eines HPDL (High Power Diode Laser) Laser ist beispielsweise 906 nm. Jedoch sind High Power Diode Laser in einer Vielzahl von Wellenlängen verfügbar und können erfindungsgemäß benutzt werden. Bevorzugt ist jedoch, dass die High Power Diode Laser mit einer Wellenlänge im NIR Bereich strahlen. Entsprechend sollte die NIR absorbierende Komponente bei den Wellenlängen 906 nm (bevorzugt +/- 10 nm) und/oder 1064 nm (bevorzugt +/- 10 nm) eine Absorption von mindestens 40 %, bevorzugt 50 %, bevorzugter 60 %, besonders bevorzugt 65 %, und ganz besonders bevorzugt 70 %, aufweisen. Der spezifische Laser oder die Wellenlänge des Lasers ist grundsätzlich nicht beschränkt. Es sollte jedoch ein Laser gewählt werden, welcher im Absorptionsbereich der NIR absorbierenden Komponente ist.

Die Absorption der NIR absorbierenden Komponente kann ausgehend von der reinen Komponente (bspw. Feststoff) mit Hilfe eine Ulbrich-Kugel bestimmt werden. Hierbei wird mit einem Detektor in der Ulbrich-Kugel die transmittierte Strahlung, welche durch die Probe in die Ulbrich-Kugel geleitet wird, gemessen. Eine Referenzmessung ohne Probe dient als Berechnungsgrundlage und zur Korrektur des Ergebnisses. Eine Quarzglasküvette kann als Probenträger genutzt werden. Die Küvette besteht aus zwei Quarzglashälften, wobei eine Hälfte über eine Aussparung verfügt, in der das Pulver eingerieselt werden kann. Die Hälften werden nach dem Befüllen geschlossen und aufgerichtet, sodass sich die Pulverschüttung verdichtet. Die Tiefe der Aussparung beträgt 0,2 und 0,5 mm (Schichtdicke). Ein geeignetes Messgerät ist Agilent Cary UV-VIS-NIR 5000, Wellenlängenbereich 250 nm-2500 nm.

Die NIR absorbierende Komponente kann auch eine VIS und NIR absorbierende Komponente sein. Sichtbares Licht (VIS) gemäß der Erfindung hat eine Wellenlänge von 380 bis 780 nm.

Die NIR absorbierende Komponente sollte bei jeder Wellenlänge im Bereich von 380 bis 1500 nm eine Absorption von mindestens 40 %, bevorzugt 45 %, bevorzugter 50 %, besonders bevorzugt 55 %, und ganz besonders bevorzugt 60 %, aufweist. Ebenso kann die NIR und VIS absorbierende Komponente im Wellenlängenbereich (bevorzugt sowie +/- 10 nm) der elektromagnetischen Energie des Lasers eine Absorption von mindestens 40 %, bevorzugt 50 %, bevorzugter 60 %, besonders bevorzugt 65 %, und ganz besonders bevorzugt 70 %, aufweisen. Entsprechend sollte die NIR und VIS absorbierende Komponente bei den Wellenlängen 906 nm (bevorzugt +/- 10 nm) sowie 1064 nm (bevorzugt +/- 10 nm) eine Absorption von mindestens 40 %, bevorzugt 50 %, bevorzugter 60 %, besonders bevorzugt 65 %, und ganz besonders bevorzugt 70 %, aufweisen.

Die NIR und VIS absorbierende Komponente können im Wellenlängenbereich der elektromagnetischen Energie des Lasers von 780 bis 1500 nm eine Absorption von mindestens 40 %, bevorzugt 45 %, bevorzugter 50 %, besonders bevorzugt 55 %, und ganz besonders bevorzugt 60 %, aufweist. Der Begriff "bei jeder Wellenlänge" bezieht sich auf jede ganzzahlige Wellenlänge.

Es ist insbesondere bevorzugt, dass die NIR absorbierende Komponente ein anorganischer Partikel ist. Die NIR absorbierende Komponente kann Ruß und/oder TiO₂ umfassen. Besonders bevorzugt ist die NIR absorbierende Komponente Ruß. Ruß absorbiert nicht nur im NIR Bereich, sondern auch im VIS Bereich, wodurch die elektromagnetische Energie (oder Strahlung) in einem größeren Wellenlängenbereich in das Pulver eingetragen werden kann. Die NIR absorbierende Komponente sollte unlöslich bei dem Fäll-Prozess sein.

Die NIR absorbierende Komponente kann der Kernpartikel sein, insbesondere kann der Kernpartikel Ruß sein. Es ist möglich, dass der Kernpartikel eine Mischung aus Ruß und TiO₂ enthält.

Die NIR absorbierende Komponente sollte einen L* (gemäß CIEL*a*b*, DIN EN ISO/CIE 11664-4) von maximal 10, bevorzugt von maximal 5, besonders bevorzugt von maximal 3, aufweist. Der L* Wert ist ein Indikator für die Fähigkeit einer Komponente im NIR und/oder VIS Bereich die elektromagnetische Energie (oder Strahlung) zu absorbieren. Ruß ist eine geeignete Komponente mit einem obig genannten L* Wert.

Die NIR absorbierende Komponente (insbesondere Ruß) ist möglichst in einer Menge von 0,01 bis 7 Gew.-%, bezogen auf das Gesamtgewicht des Verbundpartikels, vorhanden ist, bevorzugt in einer Menge von 0,1 bis 5 Gew.-%, weiter bevorzugt in einer Menge von 0,1 bis 4 Gew.-%, besonders bevorzugt in einer Menge von 0,1 bis 3 Gew.-%, und ganz besonders bevorzugt in einer Menge von 0,2 bis 2 Gew.-%. Durch den Kern-Hülle Aufbau des erfindungsgemäßen Verbundpartikels ist der Anteil der NIR absorbierende Komponente wesentlich höher als in der Hülle des Verbundpartikels. Es ist vorzugshalber eine 10 mal, 50 mal, oder 100 mal, höhere Gewichtsanteil der NIR absorbierende Komponente in dem Kern des Verbundpartikels vorhanden, bezogen auf das Gesamtgewicht der NIR absorbierende Komponente im Verbundpartikel.

Dies wird insbesondere durch einen hohen L* des Verbundpartikels ausgedrückt. Auch wenn die einzelne NIR absorbierende Komponente einen sehr niedrigen L* Wert aufweist, ist der L* Wert des Verbundpartikels hoch. Die Verbundpartikel sollten einen L* (gemäß CIEL*a*b*, DIN EN ISO/CIE 11664-4) von über 20, bevorzugt von über 30, besonders bevorzugt von über 50, aufweisen.

Die NIR absorbierende Komponente (insbesondere Ruß) kann in einer Menge von 1 bis 100 Gew.%, bezogen auf das Gesamtgewicht des Kernpartikels, vorhanden sein, bevorzugt in einer Menge von 10 bis 50 Gew.-%, weiter bevorzugt in einer Menge von 40 bis 100 Gew.-%, besonders bevorzugt in einer Menge von 80 bis 100 Gew.-%, und ganz besonders bevorzugt in einer Menge von 100 Gew.-%. Ein Wert von 100 Gew.-% in Bezug auf das Gesamtgewicht des Kernpartikels bedeutet, dass der Kernpartikel aus der NIR absorbierende Komponente besteht. Jedoch ist es möglich das der Kernpartikel aus der NIR absorbierende Komponente sowie einem zweiten Polymer besteht. Die Hülle sollte möglichst frei von der NIR absorbierender Komponente sein

Bei dem schichtweise arbeitenden Verfahren zur Herstellung von Formkörpern handelt es sich vorzugsweise um selektives Laser-Sintern.

Die jeweiligen Kernpartikel können in folgenden Formen ausgebildet sein: kugelförmig, plättchenförmig oder länglich. Darüber hinaus können die jeweiligen Kernpartikel scharfkantig, abgerundet oder glatt sein. Die genannten Kernpartikel können vor Auftrag des zu fällenden ersten Polymers gegebenenfalls zusätzlich mit Schlichtemitteln beschichtet sein.

Bei dem gefällten bzw. fällbaren ersten Polymer handelt es sich um ein Polymer, das sich in einem flüssigen Medium enthaltend ein Lösungsmittel lösen lässt, und durch Änderungen von bestimmten Parametern, wie z.B. Temperatur, Druck, Gehalt an Lösungsmittel, Nichtlöser, anti-Lösungsmittel, Fällungsmittel, als vollständig oder teilweise unlöslicher Niederschlag in Form von Flocken, Tröpfchen oder in kristalliner Form ausfällt. Die Art des Lösungsmittels und der Gehalt an Lösungsmittel, sowie die weiteren Parameter, um das entsprechende Polymer zu lösen oder zu fällen, hängen dabei vom Polymer ab.

Das fällbare bzw. gefällte erste Polymer kann aus Polyolefinen, Polyethylen, Polypropylen, Polyvinylchlorid, Polyacetal, Polystyrol, Polyimiden, Polysulfonen, Poly-(N-methylmethacrylimide) (PMMI), Polymethylmethacrylat (PMMA), Polyvinylidenflouriden (PVDF), lonomer, Polyetherketonen, Polyaryletherketonen, Polyamid, Copolyamid oder Mischungen daraus, insbesondere Mischungen aus Homo- und Copolyamid ausgewählt sein. Bevorzugt ist das fällbare bzw. gefällte erste Polymer ein kristallines oder teilkristallines Polymer. Besonders bevorzugt is das fällbare bzw. gefällte erste Polymer ein Polyamid oder ein Copolyamid.

Das fällbare bzw. gefällte erste Polymer sollte löslich bei dem Fäll-Prozess sein, insbesondere löslich im Lösungsmittel, welches zur Fällung verwendet wird. Beispielseise sollte das erste Polymer löslich in Ethanol bei dem Fäll-Prozess sein. Löslich bedeutet, dass sich mindestens 33 g/L (insbesondere 200 g/L) des entsprechenden Polymers in dem entsprechenden Lösungsmittel während des Fäll-Prozesses löst, beispielsweise bei 145 °C.Das zweite Polymer kann aus Polycarbonat, Polymethylmethacrylat, Polypropylen, Polybutylenterephthalat, Polyetylenterephthalat, Polyetheretherketon, Polyphthalamid oder Mischungen daraus ausgewählt werden. Die Kernpartikel, die ein zweites Polymer enthalten, werden beispielsweise durch Vermahlung hergestellt.

Das zweite Polymer sollte unlöslich bei dem Fäll-Prozess sein, insbesondere unlöslich im Lösungsmittel, welches zur Fällung verwendet wird. Beispielseise sollte das zweite Polymer unlöslich in Ethanol bei dem Fäll-Prozess sein. Unlöslich bedeutet, dass sich maximal 10 g/L (insbesondere 1g/L) des entsprechenden Polymers in dem entsprechenden Lösungsmittel während des Fäll-Prozesses löst, beispielsweise bei 145 °C.

Die zur Beschichtung mit dem gefällten ersten Polymer verwendeten Kernpartikel enthalten vorzugsweise ein zweites Polymer. Im Gegensatz zu Polymerpulvern, die mit anderen Partikeln oder NIR absorbierende Komponenten lediglich gemischt sind (Dry-Blend) weisen die Pulver gemäß der vorliegenden Erfindung keine Entmischung mehr auf.

Das Pulver gemäß der vorliegenden Erfindung hat vorzugsweise einen Kern-Hülle-Aufbau. Das zweite Polymer des Kernpartikels kann jegliches bekannte Polymer sein, solange das zweite Polymer in dem Lösungsmittel nicht oder im Wesentlichen nicht löslich ist, in dem das fällbare erste Polymer gelöst wird. Damit ist das zweite Polymer verschieden von dem (gefällten bzw. fällbaren) ersten Polymer. Das zweite Polymer unterscheidet sich vom (gefällten bzw. fällbaren) ersten Polymer zumindest durch seine Lösungseigenschaften in einem gegebenen Lösungsmittel, welches das erste Polymer löst.

Ferner kann das gefällte erste Polymer zur Beschichtung der Kernpartikel durch Fällung zumindest eines Polyamids des AABB-Types oder durch gemeinsame Fällung zumindest eines Polyamids des AB-Types und zumindest eines Polyamid des AABB-Types erhalten. Dabei sind cogefällte Polyamide bevorzugt, wobei zumindest Polyamid 11 oder Polyamid 12 und zumindest ein Polyamid auf der Basis von PA1010, PA1012, PA1212, PA613, PA106 oder PA1013 enthalten ist.

Folgende fällbare Polymere lassen sich beispielsweise nennen: es lassen sich Polyolefine und Polyethylen beispielsweise in Toluol, Xylol bzw. 1,2,4-Trichlorbenzol lösen. Polypropylen lässt sich beispielsweise in Toluol bzw. Xylol lösen. Polyvinylchlorid lässt sich beispielsweise in Aceton lösen. Polyacetal lässt sich beispielsweise in DMF, DMAc bzw. NMP lösen. Polystyrol lässt sich beispielsweise in Toluol lösen. Polyimide lassen sich beispielsweise in NMP lösen. Polysulfone lassen sich beispielsweise in Sulfolan lösen. Poly-(N-methylmethacrylimide) (PMMI) lassen sich beispielsweise in DMAc bzw. NMP lösen. Polymethylmethacrylat (PMMA) lässt sich beispielsweise in Aceton lösen. Polyvinylidenfluoride lassen sich in N-Methylpyrrolidon (NMP), Dimethylformamid (DMF), Dimethylacetamid (DMAc) bzw. Cyclohexanon lösen. Polyetherketone und Polyaryletherketone lassen sich beispielsweise in Diphenylsulfon bzw. in Sulfolan lösen. Polyamide lassen sich in einem alkoholischen Medium lösen, vorzugsweise einem Ethanol-Wasser-Gemisch lösen. Wie oben erläutert müssen ggf. auch Parameter wie z.B. Temperatur und Druck eingestellt werden, um ein gegebenes Polymer zu lösen.

Nach dem Lösen des betreffenden (ersten) Polymers wird dieses in Gegenwart der Kernpartikel, um diese Kernpartikel mit dem betreffenden ausgefällten ersten Polymer ganz oder teilweise zu beschichten. Wie oben erwähnt, wird ein zweites Polymer und/oder die NIR absorbierende Komponente als Kernpartikel ausgewählt, das sich unter den Bedingungen, unter denen sich das erste Polymer löst, nicht oder im Wesentlichen nicht löst. Die Fällung des ersten Polymers kann durch Änderung des Druckes, Änderung der Temperatur, Änderung (Verringerung) der Konzentration des Lösungsmittels, und ggf. Zugabe eines Nichtlösers, anti-Lösungsmittels bzw. Fällungsmittels initiiert bzw. beschleunigt werden. Bei amorphen Polymeren, wie Polystyrol, Polysulfone, PMMI, PMMA, lonomer ist der Zusatz eines Nichtlösers zur Fällung des betreffenden Polymers erforderlich.

Das fällbare erste Polymer ist vorzugsweise ein Polyamid, welches pro Carbonamid-Gruppe zumindest 8 Kohlenstoffatome aufweist. Besonders bevorzugt ist das Polymer ein Polyamid, welches 10 oder mehr Kohlenstoffatome pro Carbonamid-Gruppe aufweist. Ganz besonders bevorzugt ist das Polymer ein Polyamid, ausgewählt aus Polyamid 612 (PA 612), Polyamid 11 (PA 11) und Polyamid 12 (PA 12). Der Prozess für die Herstellung für die in den erfindungsgemäßen Sinterpulver einsetzbaren Polyamiden ist allgemein bekannt und kann für die Herstellung von PA 12 z. B. den Schriften DE 29 06 647 , DE 35 10 687 , DE 35 10 691 und DE 44 21 454 entnommen werden. Das benötigte Polyamidgranulat kann von verschiedenen Herstellern bezogen werden, beispielsweise wird Polyamid 12 Granulat von der Evonik Industries AG unter dem Handelsnamen VESTAMID angeboten.

Besonders bevorzugt handelt es sich bei dem gefällten bzw. fällbaren Polymer um Polyamid 12.

Außerdem können die entsprechenden Copolyamide oder Mischungen aus Homo- und Copolyamiden eingesetzt werden, die mindestens 70 Gewichtsprozent der genannten Bausteine enthalten. Als Comonomere können sie demnach 0 bis 30 Gewichtsprozent eines oder mehrerer Comonomere, wie Caprolactam, Hexamethylendiamin, 2-Methyl-pentandiamin(1,5), Octamethylendiamin(1, 8), Dodecamethylendiamin, Isophorondiamin, Trimethylhexamethylendiamin, Adipinsäure, Korksäure, Azelainsäure, Sebacinsäure, Dodecandisäure, Aminoundecansäure, enthalten. Die im folgenden als Polyamide bezeichneten genannten Homo- und Copolyamide werden als Granulate oder Schrot eingesetzt, die ein relative Lösungsviskosität zwischen 1,5 und 2,0 (gemessen in 0,5%iger m-Kresollösung bei 25°C nach DIN 53 727), bevorzugt zwischen 1,70 und 1,95, besitzen. Sie können durch Polykondensation, hydrolytische oder acidolytische bzw. aktivierte anionische Polymerisation nach bekannten Verfahren hergestellt werden. Bevorzugt werden ungeregelte Polyamide mit Endgruppenverhältnissen NH₂/COOH = 40/60 bis 60/40 eingesetzt.. Es können jedoch zweckmäßig auch geregelte Polyamide eingesetzt werden und zwar bevorzugt solche, bei denen das Endgruppenverhältnis NH₂/COOH 90:10 und 80:20 bzw. 10:90 und 20:80 vorliegt.

Die Kernpartikel können einen mittleren Korndurchmesser dvso von 1 µm oder größer auf. Insbesondere weisen die Kernpartikel in allen drei Raumrichtungen eine Größe von 1 µm oder mehr auf.

Ferner können die Kernpartikel einen mittleren Korndurchmesser dvso von 1 bis 100 µm, bevorzugt von 10 bis 80 µm, vorzugsweise von 10 bis 70 µm, weiter bevorzugt von 10 bis 60 µm, weiterhin bevorzugt von 10 bis 50 µm, besonders bevorzugt von 10 bis 40 µm aufweisen.

Geeignete Partikelgrößenverteilungen können durch bekannte Verfahren, z.B. Sieben, Sichten, gewährleistet werden.

Weiterhin ist bevorzugt, dass die Verbundpartikel einen mittleren Korndurchmesser dv₅₀ von 20 bis 150 µm, vorzugsweise von 20 bis 120 µm, bevorzugt von 20 bis 100 µm, weiter bevorzugt von 25 bis 80 µm und besonders bevorzugt von 25 bis 70 µm aufweisen.

In einem bevorzugten Verfahren weist die Beschichtung aus dem gefällten Polymer eine Dicke von 1,5 µm oder mehr, bevorzugt 2, 3, 5, 10, 15, 20, 25, 30 µm oder mehr auf.

Das gewichtsbezogene Verhältnis des Polymers zu den Kernpartikeln bezogen auf die Gesamtheit der Verbundpartikel beträgt bevorzugt von 0,1 bis 30, vorzugsweise von 1,0 bis 20,0 und weiter bevorzugt von 1,3 bis 10,0.

Das Verhältnis des mittleren Korndurchmessers dvso der Verbundpartikel zum mittleren Korndurchmesser dvso der Kernpartikel kann von 1,5 bis 30, vorzugsweise von 1,5 bis 25; weiter bevorzugt 1,5 bis 15, noch weiter bevorzugt 1,5 bis 12 und besonders bevorzugt 1,5 bis 10, betragen.

Das erfindungsgemäße Pulver kann eine spezifische Oberfläche nach BET im Bereich von 2 - 35 m²/g, bevorzugt 2 - 15 m²/g; besonders bevorzugt von 3 - 12 m²/g und ganz besonders bevorzugt von 3 - 10 m²/g aufweisen. Weiterhin kann das erfindungsgemäße Pulver eine Schüttdichte SD im Bereich von 200 bis 600 g/l, vorzugsweise von 200 bis 500 g/l aufweisen.

Die Dichte der Kernpartikel kann größer oder nicht mehr als 20%, vorzugsweise nicht mehr als 15%, weiter bevorzugt nicht mehr als 10% und besonders bevorzugt nicht mehr als 5% geringer als die Dichte des für die Fällung des ersten Polymers verwendeten Lösungsmittels sein.

Bei der Fällung des ersten Polymers in Anwesenheit der Kernpartikel wird besonders bevorzugt ein Alkanol (beispielsweise: Methanol, Ethanol, Propanol, Butanol), bevorzugt Ethanol als Lösungsmittel verwendet, wobei die Dichte der Kernpartikel größer ist oder nicht mehr als 20%, vorzugsweise nicht mehr als 15%, weiter bevorzugt nicht mehr als 10% und besonders bevorzugt nicht mehr als 5% geringer ist als die Dichte des Alkanols, bevorzugt von Ethanol.

Das Pulver kann die genannten Verbundpartikel alleine oder zusammen mit weiteren lose dazugemischten (Dry-Blend) Füllstoffen und/oder Hilfsstoffen enthalten. Der Anteil der Verbundpartikel im Pulver beträgt mindestens 50 Gew.-%, vorzugsweise mindestens 80 Gew.-%, bevorzugt mindestens 90 Gew.-%, besonders bevorzugt mindestens 95 Gew.-% und ganz besonders bevorzugt mindestens 99 Gew.-%.

Das erfindungsgemäße Pulver kann außerdem Hilfsstoffe und/oder weitere organische oder anorganische Pigmente aufweisen. Solche Hilfsstoffe können z. B. Rieselhilfsmittel, wie z. B. gefällte und/oder pyrogene Kieselsäuren, sein. Gefällte Kieselsäuren werden zum Beispiel unter dem Produktnamen AEROSIL^{®}, mit unterschiedlichen Spezifikationen, durch die Evonik Industries AG angeboten. Vorzugsweise weist das erfindungsgemäße Pulver weniger als 3 Gew.-%, vorzugsweise von 0,001 bis 2 Gew.-% und ganz besonders bevorzugt von 0,025 bis 1 Gew.-% solcher Hilfsstoffe, bezogen auf die Summe der vorhandenen Polymere, auf. Die Pigmente können beispielsweise Titandioxidpartikel basierend auf Rutil (bevorzugt) oder Anatas sein oder Rußpartikel.

Zur Verbesserung der Verarbeitungsfähigkeit oder zur weiteren Modifikation des erfindungsgemäßen Pulvers können diesem anorganische Fremdpigmente, wie z.B.

Übergangsmetalloxide, Stabilisatoren, wie z. B. Phenole, insbesondere sterisch gehinderte Phenole, Verlaufs- und Rieselhilfsmittel, wie z. B. pyrogene Kieselsäuren, zugegeben werden. Vorzugsweise wird, bezogen auf das Gesamtgewicht an Polymeren im Polymerpulver, so viel dieser Stoffe den Polymeren zugegeben, dass die für das erfindungsgemäße Pulver angegeben Konzentrationen für Hilfsstoffe eingehalten werden.

Optimale Eigenschaften bei der Weiterverarbeitung des Pulvers werden erreicht, wenn der Schmelzpunkt des ersten Polymers beim ersten Aufheizen größer ist als beim zweiten Aufheizen, gemessen durch Differentialscanningkalorimetrie (DSC); und wenn die Schmelzenthalpie des ersten Polymers beim ersten Aufheizen um mindestens 50% größer ist als beim zweiten Aufheizen, gemessen durch Differentialscanningkalorimetrie (DSC). Damit weist das Polymer der Hülle der Verbundpartikel (das erste Polymer) eine höhere Kristallinität auf, im Vergleich zu Pulvern, die durch andere Verfahren als Co-Fällung eines gelösten Polymers mit Partikeln hergestellt werden können. Für das Lasersintern ist insbesondere ein Polyamid 12 geeignet, welches eine Schmelztemperatur von 185 bis 189 °C, vorzugsweise von 186 bis 188 °C, eine Schmelzenthalpie von 112 +/- 17 kJ/mol, vorzugsweise von 100 bis 125 kJ/mol und eine Erstarrungstemperatur von 138 bis 143 °C, vorzugsweise von 140 bis 142 °C aufweist.

Die Erfindung stellt auch ein Verfahren bereit zur Herstellung von Pulvern gemäß der vorliegenden Erfindung, wobei ein Polymer unter Einwirkung von Druck und/oder Temperatur zur Erzeugung einer zumindest teilweisen Lösung mit einem Medium enthaltend Lösungsmittel, das das erste Polymer löst, in Gegenwart von Kernpartikeln in Berührung gebracht wird und anschließend das erste Polymer aus der zumindest teilweisen Lösung ausgefällt wird, und Erhalten von Verbundpartikeln, die durch ganz oder teilweise mit einem gefällten ersten Polymer beschichte Kernpartikel dargestellt werden, dadurch gekennzeichnet, dass die Kernpartikel eine NIR absorbierende Komponente enthalten.

In einem bevorzugten Verfahren weisen die Kernpartikel (Kern des Verbundpartikels) einen mittleren Korndurchmesser dvso von 1 µm oder großer, bevorzugt 1 bis 100 µm, bevorzugt von 10 bis 80 µm, vorzugsweise von 10 bis 70 µm, bevorzugt von 10 bis 60 µm, weiter bevorzugt von 10 bis 50 µm, besonders bevorzugt von 10 bis 40 µm auf. Geeignete Partikelgrößenverteilungen können durch bekannte Verfahren, z.B. Sieben, Sichten, gewährleistet werden.

Dabei ist der Einsatz von polymeren Kernpartikeln, die in Suspension in dem Lösungsmittel für das fällbare erste Polymer vorliegen, von besonderer Bedeutung. In einer bevorzugten Verfahrensvariante ist das Verfahren der Erfindung dadurch ausgezeichnet, dass man eine Suspension aus im alkoholischen Medium suspendierten polymeren Kernpartikeln einsetzt, wobei die Kernpartikel die oben angegebene mittlere Teilchengröße (dv₅₀) aufweisen.

Die durch das Herstellungsverfahren erzeugten Verbundpartikel weisen bevorzugt einen mittleren Korndurchmesser dvso von 20 bis 150 µm, vorzugsweise von 20 bis 120 µm, bevorzugt von 20 bis 100 µm, weiter bevorzugt von 25 bis 80 µm und besonders bevorzugt von 25 bis 70 µm auf.

Ein Vorteil des erfindungsgemäßen Verfahrens ergibt sich daraus, dass ein Arbeitsschritt bei der Herstellung des Pulvers eingespart wird, weil die Mischung von Polymerpartikeln und Hilfs- bzw. Füllpartikeln im Dry Blend nicht mehr notwendig ist.

Diese Kernpartikel können je nach Beschaffenheit Vollkugeln, Hohlkugeln, poröse Kugeln darstellen. Die jeweiligen Kernpartikel können in folgenden Formen ausgebildet sein: kugelförmig, plättchenförmig oder länglich. Darüber hinaus können die jeweiligen Kernpartikel scharfkantig, abgerundet oder glatt sein. Die genannten Kernpartikel können vor Auftrag des gefällten ersten Polymers gegebenenfalls zusätzlich mit Schlichtemitteln beschichtet sein.

Das fällbare erste Polymer ist vorzugsweise ausgewählt aus Polyolefine, Polyethylen, Polypropylen, Polyvinylchlorid, Polyacetal, Polystyrol, Polyimide, Polysulfone, Poly-(N-methylmethacrylimide) (PMMI), Polymethylmethacrylat (PMMA), Polyvinylidenflouride (PVDF), lonomer, Polyetherketone, Polyaryletherketone, Polyamid, Copolyamid oder Mischungen daraus, insbesondere Mischungen aus Homo- und Copolyamid.

Ferner kann das erste Polymer zur Beschichtung der Kernpartikel durch Fällung zumindest eines Polyamids des AABB-Types oder durch gemeinsame Fällung zumindest eines Polyamids des AB-Types und zumindest eines Polyamid des AABB-Types erhalten werden. Dabei sind cogefällte Polyamide bevorzugt, wobei zumindest Polyamid 11 oder Polyamid 12 und zumindest ein Polyamid auf der Basis von PA1010, PA1012, PA1212 oder PA1013 enthalten ist.

Die Art des Lösungsmittels und der Gehalt an Lösungsmittel, sowie die weiteren Parameter, um das entsprechende Polymer zu lösen und wieder zu fällen, hängen dabei vom Polymer ab, und sind bereits weiter oben erläutert worden.

Die folgenden Erläuterungen beziehen sich auf fällbare erste Polymere, die sich im alkoholischen Medium lösen lassen, insbesondere Polyamide. Für die Beschichtung von Kernpartikeln mit Polymeren, für die andere Lösungsmittel verwendet werden oder verwendet werden müssen, müssen die Parameter und Lösungsmittel entsprechend angepasst werden.

Bevorzugt zeichnet sich das Verfahren der Erfindung dadurch aus, dass man eine Suspension einsetzt, erhältlich durch Suspendieren der Kernpartikel im Medium enthaltend das fällbare erste Polymer lösende Lösungsmittel, beispielsweise ein alkoholisches Medium, unter Einbringung eines Energieeintrages von größer als 1000 kJ/m³. Hierdurch entstehen im Allgemeinen schon sehr brauchbare Suspensionen der Kernpartikel in dem Medium. Der angesprochene Energieeintrag lässt sich durch bekannte Aggregate bewerkstelligen. Geeignete Aggregate können sein: Planetenkneter, RotorStator-Maschinen, Rührwerkkugelmühle, Walzenstuhl und dergleichen.

Die für die Erfindung nützlichen Suspensionen werden in einem Medium erzeugt, enthaltend Lösungsmittel die das fällbare erste Polymer lösen, beispielsweise einem alkoholischen Medium. Im Falle eines alkoholischen Mediums kann es sich hierbei um einen reinen Alkohol, eine Mischung von mehreren Alkoholen oder auch um Alkohole mit einem Gehalt an Wasser oder anderen die erwünschte Umfällung der Polyamide im Wesentlichen nicht nachteilig beeinflussende Substanzen handeln. Das alkoholische Medium der Suspensionen weist bevorzugt einen Gehalt von kleiner als 50 Gew.-% nicht alkoholischer Substanzen (vorzugsweise Wasser), besonders bevorzugt weniger als 30 Gew.-% und besonders zweckmäßig weniger als 10 Gew.-% fremder nicht alkoholischer Substanzen auf. Für die Erfindung in Frage kommen generell alle Arten von Alkoholen oder Gemische davon, die eine Umfällung von Polymeren, vorzugsweise Polyamiden, unter den erwünschten Bedingungen (Druck und Temperatur) zulassen. Im Einzelfall ist es für den Fachmann ohne größeren Aufwand möglich das System an spezielle Erfordernisse anzupassen. Bevorzugt werden für das Verfahren der Erfindung als alkoholisches Medium für die Umfällung des Polyamids und/oder die Suspension der Kernpartikel ein oder mehrere Alkohole verwendet, die ein Zahlenverhältnis von Sauerstoffatomen zu Kohlenstoffatomen im Bereich von 1:1 bis 1:5 aufweisen.

Typische Alkohole zur Herstellung der Suspension der Kernpartikel sind solche mit einem Verhältnis von Sauerstoff zu Kohlenstoff von 1:1, 1:2, 1:3 , 1:4 und 1:5, bevorzugt solche mit einem Sauerstoff zu Kohlenstoffverhältnis von 1:2 und 1:3, besonders bevorzugt mit einem Sauerstoff zu Kohlenstoff-Verhältnis von 1:2. Ganz besonders zweckmäßig kommt Ethanol zum Einsatz bei der Herstellung einer Suspension der Kernpartikel sowie bei der Umfällung des fällbaren Polymers, vorzugsweise der Polyamide.

Wie oben erläutert ist das fällbare erste Polymer vorzugsweise ausgewählt aus Polyolefinen, Polyethylen, Polypropylen, Polyvinylchlorid, Polyacetal, Polystyrol, Polyimiden, Polysulfonen, Poly-(N-methylmethacrylimide) (PMMI), Polymethylmethacrylat (PMMA), Polyvinylidenflouriden (PVDF), lonomer, Polyetherketonen, Polyaryletherketonen, Polyamid, Copolyamid oder Mischungen daraus, insbesondere Mischungen aus Homo- und Copolyamid. Das fällbare Polyamid wird in einem entsprechenden Lösungsmittel gelöst, um es zur Beschichtung der Kernpartikel auf der Oberfläche derselben wieder auszufällen.

Bevorzugt werden als umfällbare Polymere Polyamide eingesetzt. Das fällbare Polymer ist vorzugsweise ein Polyamid, welches pro Carbonamid-Gruppe zumindest 8 Kohlenstoffatome aufweist. Besonders bevorzugt ist das Polymer ein Polyamid, welches 10 oder mehr Kohlenstoffatome pro Carbonamid-Gruppe aufweist. Bevorzugt als Ausgangsmaterial für das Verfahren der Erfindung einsetzbare Polyamide umfassen unter anderem Polyamid 11, Polyamid 12 und Polyamide mit mehr als 12 aliphatisch gebundenen Kohlenstoffatomen pro Carbonamidgruppe, vorzugsweise Polyamid 11 oder Polyamid 12, bevorzugt Polyamid 12. Außerdem können die entsprechenden Copolyamide oder Mischungen aus Homo- und Copolyamiden eingesetzt werden, die mindestens 70 Gewichtsprozent der genannten Bausteine enthalten. Als Comonomere können sie demnach 0 bis 30 Gewichtsprozent eines oder mehrerer Comonomere, wie Caprolactam, Hexamethylendiamin, 2-Methyl-pentandiamin(1,5), Octamethylendiamin(1, 8), Dodecamethylendiamin, Isophorondiamin, Trimethylhexamethylendiamin, Adipinsäure, Korksäure, Azelainsäure, Sebacinsäure, Dodecandisäure, Aminoundecansäure, enthalten. Die im folgenden als Polyamide bezeichneten genannten Homo- und Copolyamide werden als Granulate oder Schrot eingesetzt, die ein relative Lösungsviskosität zwischen 1,5 und 2,0 (gemessen in 0,5%iger m-Kresollösung bei 25°C nach DIN 53 727), bevorzugt zwischen 1,70 und 1,95, besitzen. Sie können durch Polykondensation, hydrolytische oder acidolytische bzw. aktivierte anionische Polymerisation nach bekannten Verfahren hergestellt werden. Bevorzugt werden ungeregelte Polyamide mit Endgruppenverhältnissen NH₂/COOH = 40/60 bis 60/40 eingesetzt. Das Einsatzpolyamid kann maximal 0,2 Gewichtsprozent H₃PO₄ enthalten. Bevorzugt wird H₃PO₄-freies Polyamid eingesetzt. Es können jedoch zweckmäßig auch geregelte Polyamide eingesetzt werden und zwar bevorzugt solche, bei denen das Endgruppenverhältnis NH₂/COOH 90:10 und 80:20 bzw. 10:90 und 20:80 vorliegt.

Die Lösung der fällbaren ersten Polymere, vorzugsweise der Polyamide, zur Umfällung kann auf alle bekannten Weisen hergestellt werden. Von Vorteil ist eine möglichst vollständige Lösung der fällbaren Polymere, vorzugsweise des Polyamids, im entsprechenden Medium, vorzugsweise einem alkoholischen Medium, in Gegenwart der darin suspendierten Kernpartikel. Die Lösung kann durch Einsatz von Druck und/oder Temperatur gefördert werden. Zweckmäßig geht man so vor, dass man des fällbare Polymer, vorzugsweise das Polyamid, im alkoholischen Medium vorlegt und unter Einwirkung von erhöhter Temperatur über die notwendige Zeit auflöst. Die Suspension der Kernpartikel kann vor, während oder nach dem Auflösen des fällbaren Polymers, vorzugsweise des Polyamids, zugegeben werden. Zweckmäßig wird die Suspension der Kernpartikel zugleich mit dem fällbaren Polymer, vorzugsweise mit dem Polyamid, vorgelegt. Der Auflösevorgang wird günstiger Weise durch den Einsatz angepasster Rühraggregate unterstützt. Die Ausfällung des fällbaren Polymers, vorzugsweise des Polyamids, kann ebenfalls durch Anwendung von Druck und/oder Temperatur unterstützt werden. So führen vorzugsweise eine Absenkung der Temperatur und/oder Abdestillierung (vorzugsweise unter vermindertem Druck) des Lösungsmittels, d.h. des alkoholischen Mediums, zur Fällung des fällbaren Polymers, vorzugsweise des Polyamids. Es ist jedoch auch möglich, die Fällung durch Zugabe eines anti-Lösungsmittels (Fällungsmittels) zu unterstützen.

Das Verfahren kann nach Bildung der Verbundpartikel zusätzlich eine Nachbehandlung der Verbundpartikel in einem Mischer mit starker Scherung umfassen. Dabei liegt die Temperatur besonders bevorzugt oberhalb des Glaspunktes des jeweiligen Polymeren. Diese Maßnahme dient dazu, das Korn abzurunden und die Rieselfähigkeit zu verbessern.

Die oben genannten Parameter werden wie folgt bestimmt:
Die BET-Oberfläche wurde nach DIN ISO 9277: 2003-05 mit einem Gasadsorptionsgerät der Fa. Micromeritics zur Bestimmung der spezifischen Oberfläche nach dem BET-Verfahren ermittelt (Micromeritics TriStar 3000 V6.03: V6.03 bezieht sich auf die Softwareversion der Software Win3000). Die BET-Oberfläche wurde mittels Gasadsorption von Stickstoff nach dem diskontinuierlichen volumetrischen Verfahren (DIN ISO 9277:2003-05, Kap 6.3.1.) bestimmt. Hierzu wurden mehrere (sieben) Messpunkte bei Relativdrücken P/P0 zwischen 0,05 und 0,20 bestimmt. Die Kalibrierung des Totvolumens erfolgte mittels He (Reinheit mind. 4,6 [99,996 %] laut Arbeitsanweisung, bzw. mindestens 4,0 [99,99 %] laut Norm; dies gilt auch für N₂). Die Proben wurden jeweils 1 Stunde bei Raumtemperatur (21°C) und 16 Stunden bei 80°C unter Vakuum entgast. Die spezifische Oberfläche wurde auf die entgaste Probe bezogen. Die Auswertung erfolgte mittels Mehrpunktbestimmung (DIN ISO 9277:2003-05, Kap 7.2). Die Temperatur während der Messung betrug 77 K.

Die Partikelgröße (Feinheit dvso) wurde mittels Laserbeugung bestimmt. Die Messungen wurden mit einem Malvern Mastersizer 2000 durchgeführt. Es handelt sich dabei um eine Trockenmessung. Für die Messung wurden jeweils 20-40 g Pulver mit Hilfe des Scirocco Trockendispergiergeräts zudosiert. Die Rüttelrinne wurde mit einer Zuführrate von 70% betrieben. Der Dispergierluftdruck betrug 3 bar. Bei jeder Messung erfolgte eine Hintergrundmessung (10 Sekunden /10000 Einzelmessungen). Die Messzeit der Probe war 5 Sekunden (5000 Einzelmessungen). Der Brechungsindex, sowie der Blaulichtwert wurden auf 1,52 festgelegt. Zur Auswertung wurde die Mie-Theorie herangezogen. Die Partikelgrößenverteilung ist eine volumengewichtete Verteilungen.

Die Schüttdichte ergibt sich gemäß DIN EN ISO 60.

Der Partikelgehalt wird durch eine Asche/Glührückstandbestimmung nach DIN EN ISO 3451 Teil 1 und Teil 4 bestimmt.

Eine Bestimmung der Lösungsviskosität erfolgte in 0,5 %-iger meta-Kresol Lösung nach ISO 307.

Die Bestimmung des L* Werts (gemäß CIEL*a*b*) erfolgt nach DIN EN ISO/CIE 11664-4 mit dem Messgerät Color i7 Spektralfotometer von x-rite.

Gegenstand der vorliegenden Erfindung sind auch Verfahren zur Herstellung von Formkörpern durch ein schichtweise arbeitendes Verfahren, bei dem selektiv Bereiche der jeweiligen Pulverschicht durch den Eintrag elektromagnetischer Energie aufgeschmolzen werden, wobei die Selektivität durch die Auftragung von Suszeptoren, Inhibitoren, Absorbern oder durch Masken erzielt wird, wobei ein erfindungsgemäßes Pulver verwendet wird, insbesondere ein Pulver, das Verbundpartikel enthält, die durch ganz oder teilweise mit einem gefällten Polymer beschichte Kernpartikel gemäß der Erfindung dargestellt werden, wobei die Wellenlänge der elektromagnetischer Energie im nahen Nahinfrarotbereich liegt in einem Wellenlängenbereich von 780 bis 1500nm liegt.

Gegenstand der vorliegenden Erfindung sind auch Formkörper, die aus dem erfindungsgemäßen Pulver durch das vorgenannte Verfahren erhalten worden sind. Der so hergestellte Formkörper enthält dabei bzw. ein Polymer bzw. Polymere, die vorzugsweise ausgewählt sind aus Polyolefinen, Polyethylen, Polypropylen, Polyvinylchlorid, Polyacetal, Polystyrol, Polyimiden, Polysulfonen, Poly-(N-methylmethacrylimide) (PMMI), Polymethylmethacrylat (PMMA), Polyvinylidenflouriden (PVDF), lonomer, Polyetherketonen, Polyaryletherketonen, Polyamid, Copolyamid oder Mischungen daraus, insbesondere Mischungen aus Homo- und Copolyamid. In einer weiteren Ausführungsform ist das Polymer zumindest ein Polyamid des AABB-Types oder eine Mischung zumindest eines Polyamids des AB-Types und zumindest eines Polyamids des AABB-Types. Dabei sind Mischungen von Polyamiden bevorzugt, wobei zumindest Polyamid 11 oder Polyamid 12 und zumindest ein Polyamid auf der Basis von PA1010, PA1012, PA1212, PA613, PA106 oder PA1013 enthalten ist.

Vorteile bei diesem Pulver, Verfahren und/oder unter Verwendung des erfindungsgemäßen Pulvers ergeben sich daraus, dass das Pulver gleichmäßig aufschmilzt und gleichzeitig ein leicht einzufärbendes Pulver erhalten wird. Zusätzlich entmischt die NIR absorbierende Komponente nicht, weniger Lunker im Bauteil entstehen, eine bessere Recyclebarkeit wird erreicht, die Bauteile haben eine höhere Dichte und eine gleichmäßige Qualität, sowie eine scharfe Trennung zwischen geschmolzenen und nicht aufgeschmolzenen Bereichen besteht, und der Verzug der Bauteile ist gering.

Die Energie wird durch elektromagnetische Strahlung eingebracht, und die Selektivität wird beispielsweise durch Masken, Auftragung von Inhibitoren, Absorbern, Suszeptoren oder aber durch eine Fokussierung der Strahlung, beispielsweise durch Laser, eingebracht. Es ist besonders bevorzugt, dass die Selektivität der schichtweise arbeitenden Verfahren durch über fokussierte Energieeinbringung erzielt wird. Die elektromagnetische Strahlung umfasst den Bereich von 100 nm bis 10 cm, bevorzugt zwischen 380 nm bis 10600 nm oder zwischen 780 und 1500 nm. Die Quelle der Strahlung kann beispielsweise ein Mikrowellengenerator, ein geeigneter Laser, ein Faserlaser, ein Heizstrahler oder eine Lampe sein, aber auch Kombinationen davon. Nach dem Abkühlen aller Schichten kann der Formkörper entnommen werden.

Die nachfolgenden Beispiele für solche Verfahren dienen der Erläuterung, ohne die Erfindung darauf beschränken zu wollen.

Die Lasersinterverfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinanderfolgende Versinterung von Schichten von Polymerpartikeln werden dreidimensionale Objekte hergestellt. Einzelheiten zum Verfahren des selektiven Laser-Sinterns sind z. B. den Schriften US 6 136 948 und WO 96/06881 zu entnehmen.

Andere gut geeignete Verfahren sind das SIV-Verfahren, wie es in WO 01/38061 beschrieben wird, oder ein Verfahren wie in EP 1 015 214 beschrieben. Beide Verfahren arbeiten mit einer flächigen Infrarotheizung zum Aufschmelzen des Pulvers.

Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8 , DE 10 2004 012 683.6 und DE 10 2004 020 452.7 beschrieben.

Die Formkörper, die durch ein schichtweise arbeitendes Verfahren, bei dem selektiv Bereiche aufgeschmolzen werden, hergestellt werden, zeichnen sich dadurch aus, dass sie zumindest ein Polymer sowie einen polymeren Verstärkungsstoff aufweisen, und dass dabei die Dichte des Komposit-Bauteiles gegenüber einem Bauteil hergestellt aus Komposit-Pulver nach dem Stand der Technik, abgesenkt wird. Weiterhin wird die Verzugsneigung reduziert und eine Verbesserung bei der Reproduzierbarkeit der mechanischen Eigenschaften im Formkörper erzielt.

Die Formkörper können außerdem Hilfsstoffe (hier gelten die Angaben wie für das Polymerpulver), wie z. B. thermische Stabilisatoren, wie z. B. sterisch gehinderte Phenolderivate, aufweisen. Vorzugsweise weisen die Formkörper weniger als 3 Gew.-%, besonders bevorzugt von 0,001 bis 2 Gew.-% und ganz besonders bevorzugt von 0,05 bis 1 Gew.-% solcher Hilfsstoffe, bezogen auf die Summe der vorhandenen Polymere, auf.

Anwendungsgebiete für diese Formkörper sind sowohl im Rapid Prototyping als auch im Rapid Manufacturing zu sehen. Mit letzterem sind durchaus Kleinserien gemeint, also die Herstellung von mehr als einem gleichen Teil, bei dem aber die Produktion mittels eines Spritzgießwerkzeugs nicht wirtschaftlich ist. Beispiele hierfür sind Teile für hochwertige PKW, die nur in kleinen Stückzahlen hergestellt werden, oder Ersatzteile für den Motorsport, bei denen neben den kleinen Stückzahlen auch der Zeitpunkt der Verfügbarkeit eine Rolle spielt. Branchen, in denen die Teile verwendet werden, können die Luft- und Raumfahrtindustrie sein, die Medizintechnik, der Maschinenbau, der Automobilbau, die Sportindustrie, die Haushaltswarenindustrie, Elektroindustrie und Lifestyle.

Die folgenden Beispiele sollen das erfindungsgemäße Pulver sowie dessen Verwendung beschreiben, ohne die Erfindung auf die Beispiele einzuschränken. Die Messwerte der Schüttdichte wurde mit einer Apparatur nach DIN EN ISO 60 ermittelt.

### Beispiele

### Vergleichsbeispiel 1: Umfällung von Polyamid 12 (PA 12)

348 kg ungeregeltes, durch hydrolytische Polymerisation hergestelltes PA 12 mit einer relativen 5 Lösungsviskosität von 1.62 und einem Endgruppengehalt von 75 mmol/kg COOH bzw. 69 mmol/kg NH2 werden mit 2500 I Ethanol, vergällt mit 2-Butanon und 1 % Wassergehalt, innerhalb von 5 Stunden in einem 3 m3 -Rührkessel (a = 160 cm) auf 145 °C gebracht und unter Rühren (Blattrührer, x = 80 cm, Drehzahl = 49 Upm) 1 Stunde bei dieser Temperatur belassen. Anschließend wird die Manteltemperatur auf 124 °C reduziert und unter kontinuierlichem Abdestillieren des Ethanols mit einer Kühlrate von 25 K/h bei der derselben Rührerdrehzahl die Innentemperatur auf 125 °C gebracht. Von diesem Punkt an wird bei gleicher Kühlrate die Manteltemperatur 2K - 3 K unter der Innentemperatur gehalten. Die Innentemperatur wird mit gleicher Kühlrate auf 117 °C gebracht und dann 60 Minuten konstant gehalten. Danach wird weiter bei einer Kühlrate von 40 K/h abdestilliert und so die Innentemperatur auf 111 °C gebracht wurde. Bei dieser Temperatur setzt die Fällung, erkennbar an der Wärmeentwicklung, ein. Die Destillationsgeschwindigkeit wird soweit erhöht, dass die Innentemperatur nicht über 111.3 °C ansteigt. Nach 25 Minuten fällt die Innentemperatur ab, was das Ende der Fällung anzeigt. Durch weiteres Abdestillieren und Kühlung über den Mantel wird die Temperatur der Suspension auf 45 °C gebracht und die Suspension danach in einen Schaufeltrockner überführt. Das Ethanol wird bei 70 °C/ 400 mbar abdestilliert und der Rückstand anschließend bei 20 mbar/86 °C für 3 Stunden nachgetrocknet.

Ein Ruß (Orion PRINTEX 60) wird im Dry-Blend-Verfahren unter Benutzung eines Henschel-Mischers P10 bei 400 U/min 5 Minuten gemischt. Erhalten wird ein in Tabelle 1 aufgeführtes Pulver

**Tabelle 1: Nicht erfindungsgemäße Pulver**

| RD UPm | EtOH I | PA kg | Partikel Kg (%) | SD g/l | D50 µm | BET m²/g | Farbzahl L* |
|---|---|---|---|---|---|---|---|
| Printex60 | | | | | | | |
| 40 | 2500 | 348 | 0,697 (0,2) | 438 | 55 | 8 | 42,6 |
| 40 | 2500 | 348 | 7,1 (2) | 347 | 55 | 8 | 19,8 |

| | | | | | | | |
|---|---|---|---|---|---|---|---|
| Der L* Wert (CIEL*a*b*) wurde gemäß DIN EN ISO/CIE 11664-4 mit dem Messgerät Color i7 Spektralfotometer von x-rite bestimmt. | | | | | | | |

### Beispiel 2: Einstufige Umfällung von PA12 mit Kernpartikeln (erfindungsgemäß)

Es wurde entsprechend Beispiel 1 eines durch hydrolytische Polymerisation hergestelltes PA12 mit einer relativen Lösungsviskosität (ηᵣₑₗ) von 1,62 und einem Endgruppengehalt von 75 mmol/kg COOH bzw. 66 mmol/kg NH2 in Anwesenheit von 162,5 - 250 kg Partikel mit den in Tabelle 2 dargestellten Kenndaten umgefällt:

**Tabelle2: Kenndaten der verschiedenen in Beispiel 2 verwendeten Kernpartikel**

| Partikel | Average Primary Particle Size (nm) ASTM D 3849 |
|---|---|
| Orion PRINTEX 60 | 21 |
| Orion PRINTEX 80 | 16 |

In diesem Beispiel wurden die Fällbedingungen gegenüber Beispiel 1 folgendermaßen abgeändert:
Fälltemperatur: 108 °C
Fällungszeit: 150 min
Rührerdrehzahl: 39 bis 82 Upm

Die Charakterisierung (Schüttdichte, Durchmesser und BET-Oberfläche) der gemäß Beispiel 2 hergestellten Pulver wird in Tabelle 3 zusammengefasst. Daneben gibt die Tabelle 3 auch die eingesetzten Mengen an Polyamid, Kernpartikel und Ethanol, sowie die bei dem Verfahren verwendete Rührerdrehzahl an.

**Tabelle 3: Erfindungsgemäße Pulver**

| RD Upm | EtOH I | PA kg | Partikel Kg (%) | SD g/l | D50 µm | BET m²/g | Farbzahl L* |
|---|---|---|---|---|---|---|---|
| | | | | | | | |

| Printex60 | | | | | | | |
|---|---|---|---|---|---|---|---|
| 40 | 2500 | 348 | 0,697 (0,2) | 406 | 55 | 11 | 73,4 |
| 40 | 2500 | 348 | 1,047 (0,3) | 425 | 56 | 6 | 70,4 |
| 40 | 2500 | 348 | 7,1 (2) | 427 | 56 | 20 | 57,2 |

Das erfindungsgemäße Beispiel 2 zeigt, dass ein Verbundpartikel hergestellt worden ist, wobei der Ruß (NIR und/oder VIS absorbierende Komponente) im inneren des Kerns angeordnet ist. Dies wird durch der L* Wert im CIEL*a*b* Farbraum gezeigt. Obwohl das Verhältnis von Ruß zu dem Polymer des Verbundpartikels in Beispiels 2 im Vergleich zum Vergleichsbeispiel 1 identisch ist, ist der L* Wert deutlich höher. Entsprechend befindet sich der Ruß im inneren des Verbundpartikels, i.e. im Kern des Partikels. Durch die NIR und/oder VIS absorbierende Komponente im inneren des Partikels, ist es möglich ein gleichmäßiges Aufschmelzen eines Pulvers zu gewährleisten und eine Verzugsneigung des zu erstellenden Bauteils kann dadurch verringert werden. Durch einen hoher L* Wert der Verbundpartikel kann das Pulver bzw. das resultierende Formkörper eingefärbt werden.

## Patentansprüche

1. Pulver zur Verwendung in einem schichtweise arbeitenden Verfahren zur Herstellung von Formkörpern, bei dem selektiv Bereiche der jeweiligen Pulverschicht durch den Eintrag elektromagnetischer Energie aufgeschmolzen werden, enthaltend Verbundpartikel, die von ganz oder teilweise mit einem gefällten ersten Polymer beschichten Kernpartikeln dargestellt werden, **dadurch gekennzeichnet, dass** die Kernpartikel eine NIR absorbierende Komponente enthalten.

2. Das Pulver nach Anspruch 1, **dadurch gekennzeichnet, dass** die NIR absorbierende Komponente bei jeder Wellenlänge im Bereich von 780 bis 1500 nm eine Absorption von mindestens 40 %, bevorzugt 45 %, bevorzugter 50 %, besonders bevorzugt 55 %, und ganz besonders bevorzugt 60 %, aufweist.

3. Das Pulver nach irgendeinem der vorherigen Ansprüche, **dadurch gekennzeichnet, dass** die NIR absorbierende Komponente bei jeder Wellenlänge im Bereich von 380 bis 1500 nm eine Absorption von mindestens 40 %, bevorzugt 45 %, bevorzugter 50 %, besonders bevorzugt 55 %, und ganz besonders bevorzugt 60 %, aufweist.

4. Das Pulver nach irgendeinem der vorherigen Ansprüche, **dadurch gekennzeichnet, dass** die NIR absorbierende Komponente Ruß und/oder TiO₂ umfasst.

5. Das Pulver nach irgendeinem der vorherigen Ansprüche, **dadurch gekennzeichnet, dass** die NIR absorbierende Komponente einen L* (gemäß CIEL*a*b*, DIN EN ISO/CIE 11664-4) von maximal 10, bevorzugt von maximal 5, besonders bevorzugt von maximal 3, aufweist und/ode dass der Verbundpartikel einen L* (gemäß CIEL*a*b*, DIN EN ISO/CIE 11664-4) von über 20, bevorzugt von über 30, besonders bevorzugt von über 50, aufweist.

6. Das Pulver nach irgendeinem der vorherigen Ansprüche, **dadurch gekennzeichnet, dass** die NIR absorbierende Komponente in einer Menge von 0,01 bis 7 Gew.-%, bezogen auf das Gesamtgewicht des Verbundpartikels, vorhanden ist, bevorzugt in einer Menge von 0,1 bis 5 Gew.-%, weiter bevorzugt in einer Menge von 0,1 bis 4 Gew.-%, besonders bevorzugt in einer Menge von 0,1 bis 3 Gew.-%, und ganz besonders bevorzugt in einer Menge von 0,2 bis 2 Gew.-%.

7. Das Pulver nach irgendeinem der vorherigen Ansprüche, **dadurch gekennzeichnet, dass** die NIR absorbierende Komponente in einer Menge von 1 bis 100 Gew.-%, bezogen auf das Gesamtgewicht des Kernpartikels, vorhanden ist, bevorzugt in einer Menge von 10 bis 50 Gew.-%, weiter bevorzugt in einer Menge von 40 bis 100 Gew.-%, besonders bevorzugt in einer Menge von 80 bis 100 Gew.-%, und ganz besonders bevorzugt in einer Menge von 100 Gew.-%.

8. Das Pulver nach irgendeinem der vorherigen Ansprüche, **dadurch gekennzeichnet, dass** die Kernpartikel einen mittleren Korndurchmesser dv50 von 1 µm oder größer, vorzugsweise 1 bis 100 µm, bevorzugt von 10 bis 80 µm, vorzugsweise von 10 bis 70 µm, weiter bevorzugt von 10 bis 60 µm, weiterhin bevorzugt von 10 bis 50 µm, besonders bevorzugt von 10 bis 40 µm aufweisen und/oder
**dass** die Verbundpartikel einen mittleren Korndurchmesser d50 von 20 bis 150 µm, vorzugsweise von 20 bis 120 µm, bevorzugt von 20 bis 100 µm, weiter bevorzugt von 25 bis 80 µm und besonders bevorzugt von 35 bis 70 µm aufweisen.

9. Das Pulver nach irgendeinem der vorherigen Ansprüche, **dadurch gekennzeichnet, dass** die Kernpartikel ein zweites Polymer enthalten, bevorzugt ist das zweite Polymer verschieden von dem ersten Polymer oder das erste und das zweite Polymer sind die gleichen Polymere.

10. Das Pulver nach irgendeinem der vorherigen Ansprüche, **dadurch gekennzeichnet, dass** (A) das gefällte erste Polymer ausgewählt ist aus Polyolefin, Polyethylen, Polypropylen, Polyvinylchlorid, Polyacetal, Polystyrol, Polyimid, Polysulfon, Poly-(N-methylmethacrylimid) (PMMI), Polymethylmethacrylat (PMMA), Polyvinylidenflourid (PVDF), lonomer, Polyetherketon, Polyaryletherketon, Polyamid, Copolyamid oder Mischungen daraus, insbesondere Mischungen aus Homo- und Copolyamid; bevorzugt Polyamid, besonders bevorzugt Polyamid 11, Polyamid 12 und Polyamide mit mehr als 12 aliphatisch gebundenen Kohlenstoffatomen pro Carbonamidgruppe, und/oder
(B) das zweite Polymer ausgewählt ist aus Polycarbonat, Polymethylmethacrylat, Polypropylen, Polybutylenterephthalat, Polyetylenterephthalat, Polyetheretherketon, Polyphthalamid oder Mischungen daraus.

11. Das Pulver nach irgendeinem der vorherigen Ansprüche, **dadurch gekennzeichnet, dass** der Anteil der Verbundpartikel im Pulver mindestens 50 Gew.-%, vorzugsweise mindestens 80 Gew.-%, bevorzugt mindestens 90 Gew.-%, besonders bevorzugt mindestens 95 Gew.-% und ganz besonders bevorzugt mindestens 99 Gew.-% beträgt.

12. Verfahren zur Herstellung von Pulvern, nach einem der Ansprüche 1 bis 11 definiert, wobei ein Polymer unter Einwirkung von Druck und/oder Temperatur zur Erzeugung einer zumindest teilweisen Lösung mit einem Medium enthaltend Lösungsmittel, das das erste Polymer löst, in Gegenwart von Kernpartikeln in Berührung gebracht wird und anschließend das erste Polymer aus der zumindest teilweisen Lösung ausgefällt wird, und Erhalten von Verbundpartikeln, die durch ganz oder teilweise mit einem gefällten ersten Polymer beschichte Kernpartikel dargestellt werden, **dadurch gekennzeichnet, dass** die Kernpartikel eine NIR absorbierende Komponente enthalten.

13. Verfahren zur Herstellung von Formkörpern durch ein schichtweise arbeitendes Verfahren, bei dem selektiv Bereiche der jeweiligen Pulverschicht durch den Eintrag elektromagnetischer Energie aufgeschmolzen werden, wobei ein Pulver nach mindestens einem der Ansprüche 1 bis 11 verwendet wird, insbesondere ein Pulver, das Verbundpartikel enthält, die durch ganz oder teilweise mit einem gefällten Polymer beschichte Kernpartikel gemäß Anspruch 12 dargestellt werden, wobei die Wellenlänge der elektromagnetischer Energie im nahen Nahinfrarotbereich in einem Wellenlängenbereich von 780 bis 1500nm liegt.

14. Verwendung des Pulvers gemäß irgendeinem der Ansprüche 1 bis 12 in einem schichtweise arbeitenden Verfahren zur Herstellung von Formkörpern, bei dem selektiv Bereiche der jeweiligen Pulverschicht durch den Eintrag elektromagnetischer Energie aufgeschmolzen werden, wobei die Wellenlänge der elektromagnetischer Energie im nahen Nahinfrarotbereich liegt, bevorzugt um ein gleichmäßiges Aufschmelzen des Pulvers zu erzielen und/oder die Verzugsneigung des zu erstellenden Bauteils zu verringern.

15. Formkörper, der durch das Verfahren nach Anspruch 14 unter Verwendung des Pulvers nach irgendeinem der Ansprüche 1 bis 12 erhalten worden ist.
